# EUROPÄISCHE PATENTSCHRIFT

(11) **EP 0 810 191 B1**
(45) Veröffentlichungstag und Bekanntmachung des Hinweises auf die Patenterteilung: **21.03.2001**
(21) Anmeldenummer: 97108494.2
(22) Anmeldetag: 27.05.1997
(51) Int. Cl.: C05F 17/00, C05F 17/02, C05F 9/04

(54) **Verfahren und Vorrichtung zur Herstellung humigener und biogener Stoffgemische aus partiell biokatalytisch abgebauten Reststoffen, sowie die damit hergestellten Erzeugnisse**
Process and device to obtain mixtures of humic and biogenic products from partially biocatalytically decomposed wastes and products obtained thereby
Procédé et appareil pour l'obtention de produits humiques et biogènes à partir des déchets décomposés partialement par biocatalyse et produits obtenues par ce procédé

(30) Priorität: 28.05.1996 CH 132296
(43) Veröffentlichungstag der Anmeldung: 03.12.1997
(73) Patentinhaber: Terravera S.A., 1930 Luxembourg (LU)
(72) Erfinder: Hefel, Walter, 8267 Berlingen (CH); Colombo, Silvano, 22036 Erba (CO) (IT); Spescha, Adelrich, 9555 Tobel (CH)
(74) Vertreter: Riebling, Peter, Dr.-Ing.

(56) Entgegenhaltungen:
- EP-A- 0 486 466
- EP-A- 0 647 604
- WO-A-91/12829
- WO-A-95/13254
- DE-A- 3 923 641
- DE-A- 4 215 267

## Beschreibung

Die Erfindung betrifft ein Verfahrens- und Anlagenkonzept für die Verarbeitung von Reststoffen vegetabilen und/oder tierischen Ursprungs aus Landwirtschaft, Gewerbe, Industrie und Kommunen, wobei die nach dem durchgeführten Bioprozess anfallenden humigenen und biogenen Stoffgemische ohne Einschränkung weiter verarbeitbar und verwendbar sind.

Die bisher bekannten Verfahren zur biologischen Aufbereitung organischer Reststoffe haben zumeist den vollständigen mikrobiell oder enzymatisch gestützten Abbau der organischen Substanz zum Ziel. Diese Prozesse werden ein- oder neuerdings zweistufig mit vorausgehender Hydrolyse der Rohstoffe durchgeführt, wobei das gewünschte Endprodukt des Abbaus der organischen Substanz meist Biogas (Methan und Kohlendioxid) ist.

Prozesse dieser Art bilanzieren Gewichtsverluste von flüchtigen Anteilen (niedermolekulare organische Verbindungen und Wasser) bis zu 36%, wobei der Verlust an organischer Substanz 29% beträgt. Bei der vollständigen Mineralisation zu Biogas beträgt der Verlust gar 45 bis 65%. Das bedeutet, daß der verbleibende Kompost einen bedeutenden Wertverlust erleidet, da er an Kohlenstoff- und Energiequellen verarmt, die für die natürlichen Bodenorganismen als Substrate von Bedeutung wären.

Für eine Einstellung des natürlichen Gleichgewichts ist es jedoch nötig, diese Organismen in ihrer Funktion als Humusbilder durch die ausreichende Versorgung mit geeigneten Substraten zu unterstützen.

Die traditionellen Bioprozesse haben zudem den Nachteil, sehr zeitaufwendig (mehrere Tage bis Wochen) zu sein und durch den hohen Mineralisierungsgrad potentiell wertvolle organische Verbindungen einer weiteren Nutzung zu entziehen. Die Umweltbelastung mit flüchtigen Verbindungen und Aerosolen, die mit dem hohen Abbaugrad einhergeht, wäre nur mit hohem Aufwand, wie dem Einsatz von Biofiltern, zu verringern.

Aus der DE39 23 641 A1 geht ein Verfahren zur aerob-thermischen Kompostierung von organischen Abfällen hervor. In dieser Druckschrift wurde die Aufgabe gestellt, Korrosion an den Anlageteilen, die durch die entstehenden aggressiven Gase und die Feuchtigkeit hervorgerufen wird, zu reduzieren. Dazu wird in dieser Druckschrift der Vorschlag gemacht, das Kohlenmonoxid nach unten hin abzuziehen, die Feuchtigkeit daraus zu entziehen und erst anschließend die Luft an die äußere Umgebung abzulassen. Ein Nachteil in dieser Anlage besteht darin, daß überhaupt Luft in die Umgebung entlassen werden muß, die immer noch gewisse Anteile an unangenehmen oder sogar aggressiven und schädlichen Bestandteilen aufweist.

Aus der WO 91/12829 gehen ein Verfahren und eine Vorrichtung hervor, die ebenfalls zur Verbesserung des Verrottungsprozesses von umbauten Kompostieranlagen dienen. Im Wesentlichen wird dabei versucht die Geruchsbelästigung durch die Abluft und den Feuchtigkeitsgehalt in der Abluft zu reduzieren. Auch diese Anlage baut auf der Grundlage der Abgabe der entstehenden Gase an die Umgebung auf, so daß gleich wie bei der DE39 23 641 A1 immer noch gewisse Anteile an Belastungen an die Umgebung abgegeben werden.

Die EP 0 486 466 A1 beschreibt ein Verfahren zum kontrollierten und gesteuerten aeroben Abbau von Organischen Abfällen. Dabei wird das abzubauende Substrat, welches gegebenenfalls mit einer Mischung aus Bakterien und Pilzen beimpft wird, oben auf das bereits in mikrobiologischem Abbau befindliche Gut aufgegeben und das umgewandelte Gut abgezogen wird, wobei für den Abbau ein sauerstoffhältiges Gas zugeführt wird. Auch diese Druckschrift basiert auf den bereits zu den vorangehend zitierten Grundprinzipien mit deren ebenfalls bereits beschriebenen Nachteilen.

Weitere Verfahren und Vorrichtungen zur Zersetzung organischer Bestandteile gehen z. B. aus den Druckschriften DE 39 23 641 A, EP 0647 604A, DE 42 15 267 A und WO 91 13254 A hervor. Und mit der DE 44 27 644 sind bereits ein Verfahren und eine Vorrichtung zur Aufbereitung von humigenen und biogenen Stoffgemischen bekannt geworden, welche weitgehend unter Verschluß in einem aeroben Feststoffreaktor stattfindet.

Nachteil dieses bekannten Verfahrens ist, daß aus dem Feststoffreaktor Prozeßwässer abgeleitet werden, die in einem komplizierten, nachgeschalteten Verfahrensfluß aufbereitet werden müssen, um unschädlich gemacht zu werden. Dies bedeutet einen außerordentlich hohen Maschinenaufwand, ein hoher Aufwand bei der Prozeßüberwachung und eine lange Durchlaufzeit für das aufzubereitende Material.

Der Erfindung liegt die Aufgabe zugrunde, ein steuerbares und zeitverkürztes Verfahren zu entwickeln, das mit Hilfe von bereits vorhandenen oder zusätzlich eingebrachten Mikroorganismen und Enzymen einen partiellen Abbau von Bioreststoffen ermöglicht, wobei möglichst keine Gase an die Umgebung abgegeben werden sollen. Gleichzeitig soll eine entsprechende Vorrichtung bereit gestellt werden.

Erfindungsgemäß werden die genannten Aufgaben durch die technische Lehre der unabhängigen Ansprüche gelöst.

Wesentliche hierbei ist, daß der Prozeß in feuchtem Zustand abläuft und der Feuchtigkeitsgehalt sowie die Temperatur über einen Sekundärkreislauf der Gasphase geregelt werden. Bei der erfindungsgemäßen Vorrichtung sind zu diesem Zweck in den Sekundärkreislauf der Gasphase ein Ventilator und ein Kondensator eingeschaltet. Zusätzlich kann ein Wärmetauscher vorgesehen sein.

Verschiedene Weiterbildungen sind in den zugeordneten Unteransprüchen enthalten.

Hierbei wird das abzubauende Gut über eine oder mehrere gegenlaufende Fördereinrichtungen in einen Mischreaktor gebracht. Durch die entgegengesetzte Förderrichtung wird eine Homogenisierung des Materials erreicht, wobei darauf geachtet wird, daß durch die auftretenden Scherkräfte die Zellwände der vorhandenen Mikroorganismen nicht geschädigt werden.

Der Prozeß läuft im feuchten Zustand und nicht in Suspension ab, der Mineralisierungsgrad ist hierbei minimal. Der Feuchtigkeitsgehalt sowie die Einhaltung bestimmter Temperaturstufen sind über einen Sekundärkreislauf der Gasphase regelbar, welcher mit Ventilator, Kondensator und Wärmetauscher ausgerüstet ist. Das über diesen Kreislauf entstehende Kondensat sowie der nicht kondensierte Brüdendampf werden dem Prozeß zum weiteren Abbau der enthaltenden flüchtigen Verbindungen laufend rückgeführt.

Dies führt zu einer deutlichen Reduktion der Belastung in der Gasphase und somit zu einer Entlastung des angeschlossenen Gaswaschsystems. Über eine Dosiereinrichtung können auch während des Prozesses Zusätze eingebracht werden. Bei Bedarf kann über einen Sauerstoffanschluß die Prozessatmosphäre für einen verstärkt aeroben Abbau optimiert werden.

Die Anlage ist über ein Gaspendelrohrsystem mit der Atmosphäre verbunden, wobei am Ende der Leitung zum Druckausgleich eine hydrostatische Schleuse angeordnet ist. Die während des Abbauprozesses gebildeten flüchtigen Verbindungen werden im Gaspendelrohrsystem laufend gebunden, indem sie erst durch einen sauren und dann durch einen alkalischen Absorptionsbehälter geleitet werden. Die in diesen Neutralisationsbehältern gebildeten Produkte werden dem Prozeß wieder zugeführt.

Durch dieses Anlagenkonzept, das auf einem geschlossenen System mit kontrolliertem Ausgleich mit der Atmosphäre beruht, werden unerwünschte Emissionen von schädlichen bzw. geruchsintensiven Stoffen in Form von Gasen oder Aerosolen verhindert. Durch die hohe Temperatur bei der Hygienisierung wird sichergestellt, daß eine niedrige Keimzahl des erhaltenen Rohstoffgemisches eingehalten wird, wodurch eine Weiterverarbeitung uneingeschränkt möglich wird. Insbesondere wird bei Verwendung des Produktes als Bodenverbesserungsmittel darauf wert gelegt, fäulnisbildende und andere unerwünschte Organismen so zu reduzieren, daß es zu keiner Beeinträchtigung der natürlichen Bodenflora kommt.

Zur Auflockerung der homogenen Reststoffgemische werden grobe Holzstücke zugesetzt, die nach dem Prozeß zur Wiederverwertung ausgesiebt werden.

Besondere Probleme ergeben sich bei der Verarbeitung großer Mengen von Bioreststoffen unterschiedlicher Qualitäten. Die Erfindung trägt dem dadurch Rechnung, daß die Zuführung von problemspezifisch abgestimmten Enzymmischungen auch während des Prozesses durch geeignete Dosiereinrichtungen ermöglicht wird. Der Wärmehaushalt ist so zu führen, daß lokale Überhitzungen, die bestimmte Enzyme inaktivieren und Mikroorganismen abtöten würden, vermieden werden, wobei während der Hygienisierungsphase die nötige Wärmemenge rasch mobilisierbar sein muß.

Die nachfolgenden Beispiele sollen den Zweck und die breiten Anwendungsmöglichkeiten der Erfindung illustrieren:

### Beispiel 1

Reststoffe aus Schlachtabfällen werden im Mischreaktor mit Kulturen von Lactobazillen und Bifidobakterien, sowie einem Gemisch von proteolytischen und lipolytischen Enzymen versetzt. Ein pH-Wert von 3 wird zu Prozeßbeginn eingestellt. Nach etwa 10 Stunden Reaktionszeit bei 45- 55°C und weiteren 10 Stunden bei 60-65°C entsteht ein partiell abgebautes Stoffgemisch, aus dem nach erfolgter Hygienisierung wertvolle Aminosäuren isoliert werden können.

### Beispiel 2

Küchen-, Garten-, Strauch- und Baumabfälle werden bei einem pH-Wert von 5-7 ohne zusätzliche Mikroorganismen mit einem Enzymgemisch aus Amylasen, Glucanasen, und Xylanasen als Prozeßaktivatoren versetzt. Unter denselben Prozeßbedingungen wie in Beispiel 1 fällt ein partiell abgebautes Stoffgemisch an, das als Bodenverbesserungsmittel für verschiedene Pflanzenarten eingesetzt werden kann.

Die Reihe von Beispielen für die Verarbeitung von Reststoffen läßt sich beliebig erweitern, wobei übereinstimmend festgestellt werden kann, daß bereits nach zweistündiger Behandlungszeit eine signifikante Verminderung an geruchsintensiven Inhaltsstoffen erfolgt und die gesamte Prozeßdauer je nach Reststoffzusammensetzung somit noch wesentlich herabgesetzt werden kann.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind. Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert das Fließschema des erfindungsmäßen Verfahrens;
- Figur 2:: eine gegenüber Figur 1 spezifiziertere Ausführungsform mit einer detaillierteren Darstellung der maschinentechnischen Einrichtungen;
- Figur 3:: schematisiert die Darstellung eines Gaswäschers zur Verwendung in dem Verfahrensschema nach Figur 1 oder Figur 2;
- Figuren 4, 5:: jeweils vereinfachte Anlagenkonzepte für den Sekundärkreislauf und die Gaswäsche.

In der Reststoffannahme A wird das Material in Pfeilrichtung 8 eingespeist und über den Transportweg 9, der beispielsweise als Längsförderer ausgebildet sein kann, den verschiedenen Reststoffboxen A-1 bis A-5 über die Abzweigungen 10-1 bis 10-5 zugeführt. Die Reststoffboxen sind siloartige Behälter, die geschlossen sind und deren unterer Auslauf 11-1 bis 11-5 über eine gemeinsame Abzweigung 13 miteinander verbunden sind.

Die evtl. in den Reststoffboxen A-1 bis A-5 entstehenden Gase werden an der Kuppel des siloartigen Behälters über die Leitungen 14 entnommen und in die Leitung 12 eingespeist, wo das hier entstehende Gas über den Biofilter 6 geleitet wird. Die Funktion dieses Biofilters wird später noch genauer beschrieben werden.

Die Verteilung des aufzubereitenden Materials von der Reststoffannahme auf die unterschiedlichen Reststoffboxen A-1 bis A-5 erfolgt nach Art der Reststoffe, nämlich z.B., daß in der einen Reststoffbox A-1 lediglich pflanzliche Abfälle aufgenommen werden, während in der Reststoffbox A-2 lediglich Speiseabfälle aufgenommen werden und beispielsweise in der Reststoffbox A-3 lediglich Gartenabfälle aufgenommen werden.

Die Abzweigung 13 mündet in dem Mischreaktor 1, wobei gesteuert im jeweiligen Auslauf 11-1 bis 11-5 eine Dosierung der in den Mischreaktor 1 eingegebenen Stoffe stattfindet, so daß die Stoffe immer nur in einem bestimmten Mengenverhältnis in den Mischreaktor 1 eingespeist werden.

Wichtig hierbei ist, daß der Mischreaktor 1 unter vollständigem Luftabschluß arbeitet und bevorzugt einen Doppelmantel aufweist, der beheizbar und kühlbar ist.

Wie bereits schon in der DE 44 27 644 A1 offenbart ist, muß anfänglich zum Starten der aeroben Reaktion Wärme zugeführt werden und bei laufender aerober Aufbereitung der Stoffe fällt Wärme an, die bevorzugt teilweise bis zur Aufrechterhaltung einer bestimmten Prozesstemperatur abgeführt werden kann.

Über ein Sauerstoffdepot 1.6 wird über die Leitung 15 Sauerstoff in den Mischreaktor 1 eingegeben, und zwar nur die Menge von Sauerstoff, damit die aerobe Reaktion arbeiten kann.

Es sind ferner Vorlagengefässe 1.3 - 1.5 vorhanden, die über die Leitung 16 mit dem Mischreaktor verbunden sind. Der Abbauvorgang im aeroben Mischreaktor erfolgt vorzugsweise in drei verschiedenen Temperaturbereichen, die auch verschiedene enzymatische Aktivatoren pro Temperaturbereich benötigen. Ein erster
Temperaturbereich wird im Bereich zwischen 40° bis 45°C definiert; der zweite Temperaturbereich im Bereich zwischen 50 bis 55°C und der dritte Temperaturbereich im Bereich zwischen 60 bis 65°C.

Wenn man diese Temperaturbereiche voneinander trennt und jedem Temperaturbereich ein eigenes enzymatisches System zuordnet, erfolgt eine optimierte Aufbereitung der im Mischreaktor aufbereiteten Reststoffe. Damit kann die Reaktionszeit wesentlich verkürzt werden, im Vergleich zu der Reaktionszeit nach dem Reaktor in der DE 44 27 644 auf etwa 1/3 der dort angegebenen Zeit.

In den genannten Vorlagengefässen 1.3 bis 1.5 sind nun unterschiedliche enzymatische Gemische angeordnet, die je nach Temperaturbereich getrennt über die Leitung 16 in den Mischreaktor 1 eingeleitet werden.

Hierbei ist das Vorlagengefäss 1.3 für die Lagerung des enzymatischen Aktivators nur beispielhaft angegeben; es können auch mehrere Vorlagegefässe 1.3 nebeneinander und parallel zueinander angeordnet werden, wobei z.B. in dem einen Vorlagengefäss 1.3 ein Enzymgemisch aus Amylasen angeordnet wird, während im zweiten Vorlagengefäss 1.3 ein Gemisch aus Glukanasen usw. angeordnet ist.

Im weiteren Vorlagengefäss 1.4 sind Stoffe für die pH-Regulierung angeordnet, d.h. es sind saure Stoffe vorhanden, welche den gesamten Vergärungsprozeß im Mischreaktor unter sauren Bedingungen (Hydrolyse) ablaufen lassen.

Im letzten Vorlagengefäss 1.5 sind Beimischungen vorhanden, die dann zugeführt werden, wenn in dem aufzuarbeitenden Material im Mischreaktor Defizite vorhanden sind, die durch derartige Beimischungen ausgeglichen werden können.

Es findet nun ein Aufbereitungsprozeß im Reaktor statt, wobei der Reaktor beispielsweise bodenseitig zwei gegenläufig angeordnete Mischschnecken aufweisen kann, die das Material zwischen sich aufnehmen und in einem umlaufenden Strom an den Wänden vorbeileiten, so daß das gesamte aufzubereitende Material in großflächigen Kontakt mit den Wänden des Mischreaktors und mit der Atmosphäre im Mischreaktor kommt. Gleichzeitig wird das Material aufgelockert, wobei ein Feuchtigkeitsanteil von etwa 55 bis 60% im Mischgut bevorzugt aufrechterhalten wird. Wichtig ist, daß die anfallenden Prozeßwässer nicht aus dem Mischreaktor entfernt und abgelassen und in einem getrennten Prozeß aufwendig entgiftet werden müssen; dies wird bei der vorliegenden Erfindung vorteilhaft vermieden.

Die Aufbereitung des Materials erfolgt in den vorher erwähnten Temperaturbereichen unter Zugabe der für diesen Temperaturbereich spezifischen Aktivatormischung und ggf. den für diesen Temperaturbereich vorgesehenen Beimischungen, wobei das Material in jeweils diesem Temperaturbereich über eine bestimmte Zeit lang behandelt wird. Es wird von einer unteren Temperatur über eine gewisse Zeit in eine obere Temperatur überführt, wobei als günstig erkannt wurde, daß pro Temperaturbereich eine Reaktionszeit von etwa 5 Stunden vorgesehen ist. Es gibt Zwischenzeiten, die benötigt werden, um das Material von dem einen Temperaturbereich in den anderen zu überführen und diese Zwischenzeiten müssen mit in die Reaktionszeit kalkuliert werden.

Nach dem Stand der Technik ist es bekannt, Bodenverbesserer nur in Form von Kunstdünger oder organischen Düngern einzubringen, was mit einer Verarmung der Bodenflora und -Fauna einhergeht. Hier setzt die Erfindung ein, die statt eines organischen Düngers oder eines Kunstdüngers einen natürlichen, hochwertigen organischen Rohstoff vorsieht, welcher direkt als Substrat für die Bildung von Humusstoffen im Erdboden dient. Hiermit wird also bereits die vorhandene Flora und Fauna im Boden gefordert, sich zu entwickeln, weil nur diese vorhandenen Flora und Faunakomponenten in der Lage sind, den mit dem erfindungsgemässen Verfahren hergestellten Wertstoff entsprechend in Humus umzusetzen. Damit wird also mit dem vorliegenden Verfahren die Bodenflora und -Fauna im wesentlichen Umfang verbessert, was mit den bisherigen Maßnahmen nicht der Fall war.

Im Vergleich zu einer natürlichen Humusbildung, wie sie z.B. im Waldboden stattfindet, hat die vorliegende Erfindung den Vorteil, daß von vornherein giftige oder fäulniserregende Bakterien entfernt werden und nur noch ein organischer, natürlicher Wertstoff in den Boden eingebracht wird, der keine giftigen oder fäulniserregenden Stoffe mehr beinhaltet.

Der Brüdendampf, der sich im Auffangtank 2.1 bildet, wird über eine Leitung 26, die oberhalb des Flüssigkeitsspiegels 21 liegt, aus diesem Auffangtank 2.1 entnommen und über einen Ventilator 2.3 wieder über die Leitung 27 in den Mischreaktor 1 zurückgeführt.

Zu Beginn des Aufbereitungsprozesses im Mischreaktor 1 kann es vorkommen, daß sich ein Luftpolster im Mischreaktor 1 bildet, welches über die Leitung 26 und die daran abzweigende Leitung 27 über ein Ventil 28 entnommen werden kann und dem Biofilter 6 zugeführt wird.

Diese Abführung des Luftpolsters erfolgt aber nur zu Beginn des Aufbereitungsprozesses, wonach dann also das Ventil 28 dauernd geschlossen bleibt.

Es muß davon ausgegangen werden, daß während der aeroben Aufbereitung im Mischreaktor 1 CO₂-Gase entstehen, die ebenfalls in den Auffangtank 2.1 gelangen und über die Leitung 26 entnommen werden. Nachdem das Ventil 28 geschlossen bleibt, erfolgt ein Druckaufbau, und diese Gase werden über die Leitung 29 in den Gaswaschbehälter 3 für saure Komponenten eingeleitet.

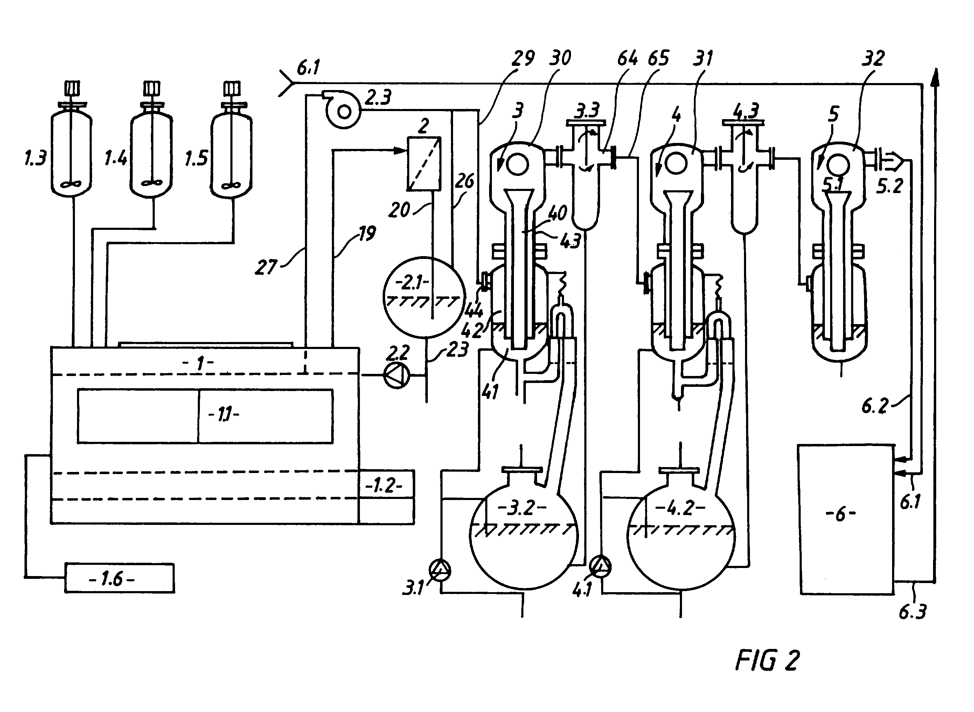

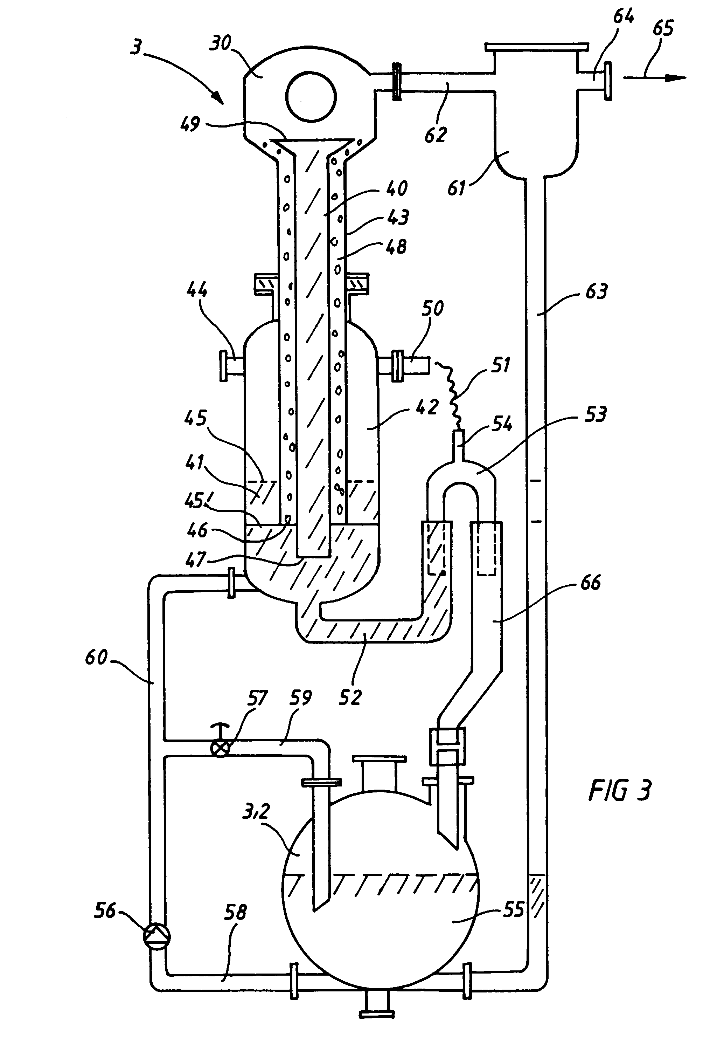

Eine genauere Darstellung dieses Gaswaschbehälters 3 wird in den Figuren 2 und 3 noch gegeben.

Im wesentlichen erfolgt in dem Gaswaschbehälter 3 eine Bindung von CO₂-Gas an Kalk in der Form, daß der Kalk in seine Carbonatform umgewandelt wird. Neben dem CO₂-Gas werden auch noch alle anderen sauren Komponenten gebunden, welche über die Leitung 29 in den Gaswaschbehälter 3 eingeleitet werden.

Es ist ein weiterer Gaswaschbehälter 4 vorhanden, der über eine Leitung 33 mit dem Kopf 30 des Gaswaschbehälters 3 verbunden ist, wobei in diesem Gaswaschbehälter die alkalischen Komponenten in Salze umgesetzt werden, d.h. aus dem Prozesskreislauf entfernt werden.

Über eine weitere Leitung 34 ist der Kopf 31 des Gaswaschbehälters 4 mit einer hydrostatischen Schleuse 5 verbunden, welche hydrostatische Schleuse den Druckverschluß des gesamten Prozesses zur Atmosphäre bewirkt, wobei ein Absicherungerüberdruck bis etwa 0,2 bar besteht.

Sobald der vorgegebene Druck von 0,2 bar überschritten wird, wird das überschüssige Gas über die Leitung 35 in den Biofilter 6 eingeleitet.

Die Einleitung in den Biofilter 6 erfolgt jedoch nicht druckdicht über eine geschlossene Leitung, sondern in dem Biofilter 6 sind entsprechende Ansaugpumpen angeordnet, welche einen Ansaugstrom über die Leitungen 36, 37, 38 erzeugen, und hierbei unter Luftzumischung durch den offenen Trichter 39 das zu behandelnde Gas in den Biofilter 6 eingesaugt wird.

Im Biofilter 6 werden lediglich noch Restspuren von Geruchsemissionen aufbereitet, die in dem vorliegenden Prozeß nur noch rudimentär anfallen.

Der Biofilter 6 ist über eine Abluftleitung 6.3 in die Atmosphäre entlüftet.

Wesentlich bei der vorliegenden Erfindung ist, daß auftretende Gasballastpolster in ihrem Volumen durch die beschriebenen Gaswaschbehälter 3 und 4 so stark reduziert werden, daß der Biofilter 6 praktisch nur eine Sicherheitsmaßnahme darstellt, um noch rudimentär auftretende Gasanteile zu entgiften und zu neutralisieren. Durch die Elimination dieser Gasballastpolster im System selbst durch die besagten Gaswaschbehälter 3 und 4 wird gewährleistet, daß ein ausgewogenes Reaktionsmilieu gehalten werden kann, ohne daß die Notwendigkeit besteht, die entstehenden Gase durch aufwendige und großbauende Biofilter zu entfernen.

Hier liegt also ein wesentlicher Vorteil des erfindungsgemässen Verfahrens, daß der vorgesehene Biofilter 6 wesentlich kleiner dimensioniert werden kann als bekannte und vorhandene Biofilter; d.h. bei bekannten Verfahren haben die Biofilter eine etwa 5- bis 10-fach größere notwendige Fläche als der Biofilter im vorliegenden erfindungsgemässen Verfahren.

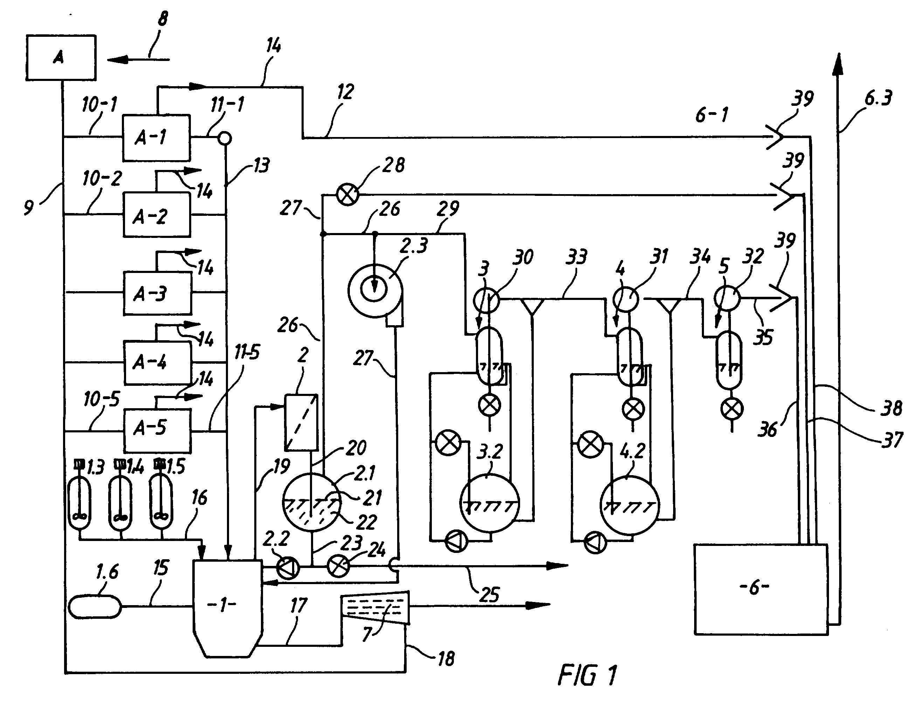

In Figur 2 sind die gleichen Verfahrenskomponenten mit den gleichen Bezugszeichen versehen, so daß auf eine einzelne Beschreibung verzichtet wird, nachdem diese bereits schon mit Figur 1 gegeben wurde.

Es wird nur noch angemerkt, daß in dem Vorrichtungsschema nach Figur 2 dargestellt ist, daß der Mischreaktor 1 mit einem Heiz- und Kühlmantel 1.1 versehen ist und daß ferner ein Getriebemotor 1.2 vorhanden ist, welcher die vorher erwähnten Mischschnecken antreibt.

Es werden im folgenden anhand der Figur 2 die Gaswaschbehälter 3 und 4 näher beschrieben.

Nachdem diese Gaswaschbehälter gleich aufgebaut sind, reicht es aus, einen einzigen Gaswaschbehälter zu beschreiben.

Der Gaswaschbehälter besteht im wesentlichen aus einem Kopf 30, in dem ein Schauglas eingebaut ist.

In den Kopf mündet ein Steigrohr 40 mit einer trichterartig sich erweiternden oberen Öffnung, welches Steigrohr 40 mit seinem fußseitigen Ende in die Flüssigkeit 41 im Behälter 42 des Gaswaschbehälters 3 eintaucht.

Ferner ist der Kopf 30 des Gaswäschers 3 über ein weiteres Rohr 43 mit dem Behälter 42 druckdicht verbunden, wobei das Rohr 43 von dem vorher erwähnten Steigrohr 40 durchgriffen wird. Dieses Rohr 43 mündet ebenfalls in die Flüssigkeit 41.

Der Einlaß 44 in den Behälter 42 ist über die Leitung 29 mit dem Ausgang des Ventilators 2.3 verbunden, so daß die zu neutralisierenden Gase in den Behälter oberhalb der Flüssigkeit 41 eingespeist werden.

Die weitere Erläuterung dieses Gaswäschers erfolgt anhand der Figur 3.

Wird nun vom Mischreaktor her das Gas über den Einlaß 44 in den Behälter 42 geleitet, dann wird die dort lagernde Flüssigkeit 41 mit ihrem Flüssigkeitsspiegel 45 auf den Stand des Flüssigkeitsspiegels 45' aufgrund des bestehenden Gasdruckes abgesenkt.

Die Absenkung erfolgt solange, bis der Flüssigkeitsspiegel 45 bündig mit der unteren Mündung 46 des äußeren Rohres 43 kommt. Hierbei ist wichtig, daß die Mündung 46 oberhalb der Mündung 47 des inneren Steigrohres 40 angeordnet ist. Hierbei entstehen Gasblasen im Ringraum 48 zwischen dem Außenumfang des inneren Steigrohres 40 und dem Innenumfang des Rohres 43, die nach oben in den Bereich des Kopfes 30 steigen. Diese Gasblasen nehmen Flüssigkeit mit und steigen als perlende Flüssigkeitssäule nach oben, wo sie in den Kopf 30 gelangen und in die trichterförmige Öffnung 49 des Steigrohres 40 hineinfliessen.

Sinn dieser Maßnahme ist, daß die Gasblasen mit der im Behälter lagernden reaktiven Flüssigkeit 41 eine große Oberfläche einnehmen und sich in diesem Ringraum 48 auf optimale Weise mit der Flüssigkeit durchmischen und in diese Flüssigkeit übergehen und mit dieser Flüssigkeit reagieren.

Die in dem Steigrohr 40 aufgefangene Flüssigkeit sinkt wieder nach unten und wird über die Mündung 47 wieder in die im Behälter lagernde Flüssigkeit 41 eingespeist.

Es handelt sich also um einen Kreisprozeß, der beliebig lange ablaufen kann.

Es erfolgt ein Druckausgleich am Auslauf der Gaswaschbehälters 3 in der Weise, daß bodenseitig am Behälter 42 eine Auslaßleitung 52 angeordnet ist, die flüssigkeitsgefüllt ist und die in einen anhebbaren und absenkbaren Syphonbogen 53 mündet.

Der Flüssigkeitsspiegel in diesem Syphonbogen 53 stellt sich so ein, daß ein Kreislauf stattfindet, wobei eine Druckerhöhung im freien Teil des Syphonbogens 53 dadurch erfolgt, daß der freie Teil des Syphonbogens über die Öffnung 54 mit einer flexiblen Leitung 51 druckdicht mit dem Auslaß 50 des Behälters 42 verbunden ist.

Es wird damit ein unbeabsichtigtes Auslaufen der Flüssigkeit aus dem Behälter 42 nach dem Saugheberprinzip vermieden, weil der Syphonbogen 53 mittels der flexiblen Leitung 51 gasvorbelastet ist.

Er ist im übrigen verstellbar in der Leitung 52 und der weiteren Leitung 66 gehalten, so daß der Flüssigkeitsspiegel des Auslaufs in weiten Grenzen einstellbar ist.

Die über den Syphonbogen 53 abfließende Flüssigkeit gelangt in einen Spülflüssigkeitstank 3.2, der druckdicht ausgeführt ist und in den die Leitung 66 mündet. In diesem Spülflüssigkeitstank 3.2 ist der Vorratsbehälter für die Reaktionsflüssigkeit 55.

An der Bodenseite des Spülflüssigkeitstanks 3.2 setzt ein Auslauf 58 an, in dessen Bereich eine Pumpe 56 arbeitet, welche einen Kreislauf über ein Ventil 57 und eine Leitung 59 in den Spülflüssigkeitstank zurück bewirkt.

Je nach Stellung des Ventils 57 kann damit die Spülflüssigkeit im Kreislauf geführt werden. Damit findet immer eine Durchmischung im Spülflüssigkeitsbehälter 3.2 statt und damit ist ferner immer ein Austausch der Waschflüssigkeit im Behälter 42 des Gaswäschers 3 gewährleistet, weil über die Leitung 60 diese frische Flüssigkeit in den Behälter 42 gelangt.

Sollte sich im Kopf 30 des Gaswäschers 3 Schaum bilden, dann wird der entstehende Schaum über die Leitung 62 einem Schaumabscheider 61 zugeführt, dessen Auslauf 63 mit dem Spülflüssigkeitstank 3.2 verbunden ist.

Der weitere Ausgang 64 des Schaumabscheiders 61 führt in den Gaswaschbehälter 4 für alkalische Komponenten vorbei, wobei dieser Ausgang 64 druckdicht über eine Leitung 65 mit dem Eingang des nächsten Gaswaschbehälters 4 verbunden ist. In diesem Gaswaschbehälter findet die Beseitigung alkalischer Komponenten der Prozeßgase statt, wobei mit einer anderen Reaktionsflüssigkeit gearbeitet wird. Ansonsten sind die Funktionsabläufe genau gleich, wie sie anhand des Gaswaschbehälters 3 beschrieben wurden.

Auch die als letzte Verfahrensstufe vorgesehene hydrostatische Schleuse 5 arbeitet nach dem Doppelrohrprinzip, wie es anhand der Figur 3 und den dort gezeigten Rohren 40,43 und dem damit wirksamen Ringraum 48 erläutert wurde.

In dieser hydrostatischen Schleuse ist lediglich eine Sperrflüssigkeit vorhanden, welche den druckdichten Abschluß des Systems zur Atmosphäre gewährleistet.

Diese hydraulische Schleuse hat einen Druckausgleich 5.1, welche die Kontrolle mittels Wassersäule für den druckdichten Abschluß des Systems bewirkt, wobei ein Anschluß 5.2 über eine Ansaugleitung zum Biofilter 6 vorhanden ist (Fig. 2).

Wenn die Anlage undicht ist, dann sieht man am Stand der Flüssigkeitssäule in der hydrostatischen Schleuse 5 evtl. Undichtigkeiten.

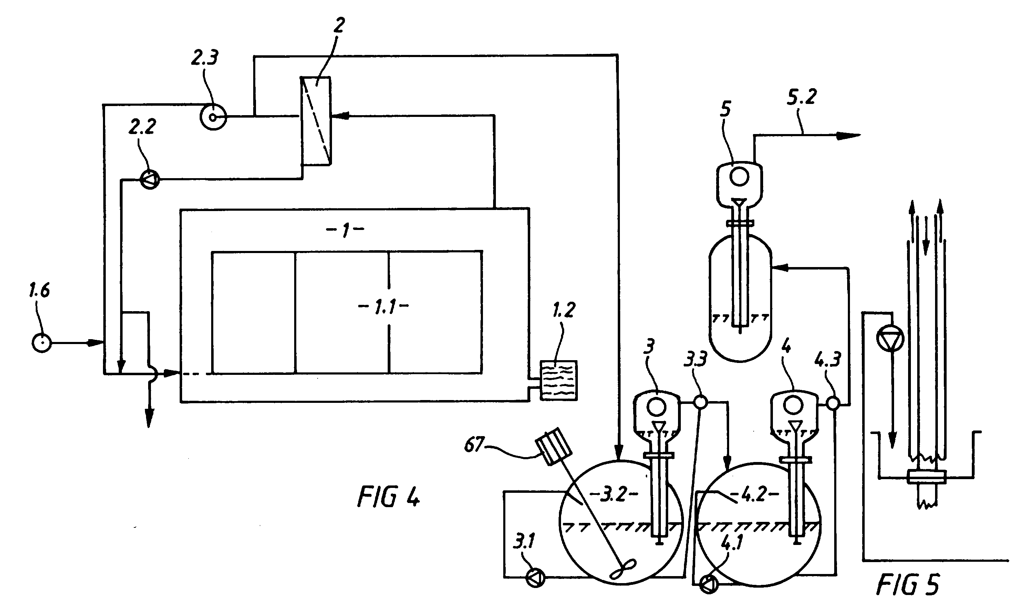

Die Figuren 4 und 5 zeigen jeweils vereinfachte Konzepte für den Sekundärkreislauf und die Gaswäsche. Es wurden hierbei für gleiche Bauteile diesselben Bezugszeichen wie bei den Figuren 1 - 3 verwendet. Auf eine genaue Darstellung der Wirkungsweise sowie eine Beschreibung der verwendeten Bauteilen kann daher verzichtet werden.

Es sei lediglich zu Figur 5 erwähnt, daß die Gaswaschrohre 3 und 4 direkt in den jeweiligen Tanks 3.2 bzw. 4.2 angeordnet sind. Alternativ oder auch zusätzlich kann mittels eines Rührwerks 67 eine Durchmischung erfolgen.

Kern des vorliegenden Verfahrens ist also, daß man Prozeßabwässer vermeidet und diese Prozeßabwässer in Dampffor aus dem Mischreaktor ableitet und in kondensierter Form in de Mischprozeß wieder zurückleitet, um eine aufwendige Behandlun von Prozeßabwässern zu vermeiden.

Weiteres wichtiges Merkmal der Erfindung ist, daß man Geruchsemissionen - soweit sie überhaupt entstehen können und entsprechende Gase möglichst dadurch unschädlich macht, daß m die nicht abbaubaren Gase wie z.B. CO₂ in ihrem Volumen reduziert und entgiftet oder neutralisiert, um so eine Rückführung in den Prozeß zu vermeiden. Nur noch am Ausgang d Gasentgiftung oder Neutralisationsstufen entstehende Restgase müssen dann vom Biofilter aufgenommen werden, der entsprechen klein dimensioniert werden kann.

Insgesamt ergibt sich damit ein Verfahren, welches mit hoher Leistung organische und anorganische Reststoffe aufbereiten kann, wobei z.B. in einer industriellen Anlage Chargengrößen von 20000 Tonnen pro Jahr verarbeitet werden können.

Die sechs Mischreaktoren haben hierbei ein Aufnahmevolumen vor je 9 Tonnen, während die Reststoffboxen (als Vorratsbehälter) vorzugsweise ein Volumen von etwa 30 Tonnen aufweisen.

Das Verfahrenserzeugnis, nämlich das im Mischreaktor endgültige aufbereitete Produkt kann zur Bodenverbesserung von herkömmlichen Landschaften eingesetzt werden, nämlich als Starter für die Humusbildung von landwirtschaftlichen Böden.

Zeichnungs-Legende
- 1: Mischreaktor
- 1.1: Heiz- und Kühlmantel
- 1.2: Getriebemotor
- 1.3: Vorlagegefäss für Aktivator
- 1.4: Vorlagegefäss für pH-Regulierung
- 1.5: Vorlagegefäss für Beimischungen
- 1.6: Sauerstoffdepot
- 2: Kondensator
- 2.1: Auffangtank für Kondensat
- 2.2: Pumpe für Kondensatrückführung in Mischreaktor
- 2.3: Ventilator für Brüdendampfrückführung in Mischreaktor
- 3: Gaswaschbehälter für saure Komponenten
- 3.1: Spülflüssigkeitskreislauf mit Pumpe und Niveauregelung
- 3.2: Spülflüssigkeitstank
- 3.3: Schaumabscheider mit Rückführungsleitung in Tank
- 4: Gaswaschbehälter für alkalische Komponenten
- 4.1: Spülflüssigkeitskreislauf mit Pumpe und Niveauregelung
- 4.2: Spülflüssigkeitstank
- 4.3: Schaumabscheider mit Rückführungsleitung in Tank
- 5: Hydrostatische Schleuse
- 5.1: Druckausgleich und Kontrolle mittels Wassersäule
- 5.2: Anschluß an Ansaugleitung zum Biofilter
- 6: Biofilter
- 6.1: Zufuhrleitung aus Reststofflagerbehältern
- 6.2: Zufuhrleitung aus Mischreaktor über hydrostatische Schleuse
- 6.3: Abluftleitung in Atmosphäre
- 7: 7 Sichter
- A: Reststoffannahme
- A-1-5: Reststoffboxen

- 8: Pfeilrichtung
- 9: Transportweg
- 10: Abzweigung
- 11: Auslauf
- 12: Leitung
- 13: Abzweigung
- 14: Leitungen
- 15: Leitung
- 16: Leitung
- 17: Austragsleitung
- 18: Transportweg
- 19: Leitung
- 20: Leitung
- 21: Flüssigkeitsspiegel
- 22: Flüssigkeit
- 23: Leitung
- 24: Ventil
- 25: Leitung
- 26: Leitung
- 27: Leitung
- 28: Ventil
- 29: Leitung
- 30: Kopf
- 31: Kopf
- 32: Kopf
- 33: Leitung
- 34: Leitung
- 35: Leitung
- 36: Leitung
- 37: "
- 38: "
- 39: Trichter
- 40: Steigrohr
- 41: Flüssigkeit
- 42: Behälter
- 43: Rohr
- 44: Einlaß
- 45: Flüssigkeitsspiegel 45'
- 46: Mündung
- 47: "
- 48: Ringraum
- 49: Öffnung
- 50: Auslaß
- 51: flexible Leitung
- 52: Auslaßleitung
- 53: Syphonbogen
- 54: Öffnung
- 55: Reaktionsflüssigkeit
- 56: Pumpe
- 57: Ventil
- 58: Auslauf
- 59: Leitung
- 60: Leitung
- 61: Schaumabscheider
- 62: Leitung
- 63: Auslauf
- 64: Ausgang
- 65: Leitung
- 66: Leitung
- 67: Rührwerk

## Patentansprüche

1. Verfahren zur Herstellung humigener und biogener Stoffgemische aus Reststoffen in einer gegenüber der Umgebung im wesentlichen geschlossenen Anlage, **dadurch gekennzeichnet**, daß der Prozeß in feuchtem Zustand abläuft und der Feuchtigkeitsgehalt sowie die Temperatur über einen Sekundärkreislauf der Gasphase geregelt werden, daß das in einem Mischreaktor (1) der Anlage enthaltene Material homogenisiert wird, daß in der Gasphase entstehendes Kondensat in den Mischreaktor (1) rückgeführt wird, daß nicht kondensierter Brüdendampf aus der Gasphase in den Mischreaktor (1) zurückgeführt wird und daß die in den Gaswaschbehältern (3, 4) entstehenden Produkte ebenfalls in den Mischreaktor (1) rückgeführt werden, und daß eine hydrostatische Schleuse (5) angeordnet ist, die nur im Falle eines entsprechenden Überdruckes Gas über einen Biofilter (6) in die Umgebung entläßt, und ansonsten die Anlage ein geschlossenes System ist.

2. Verfahren nach Anspruch 1, **dadurch gekennzeichnet**, daß Sauerstoff, Enzyme und/oder Mikroorganismen zugesetzt werden.

3. Verfahren nach einem der Ansprüche 1 oder 2, **dadurch gekennzeichnet**, daß der PH-Wert in dem Mischreaktor (1) geregelt wird.

4. Verfahren nach einem der Ansprüche 1 - 3, **dadurch gekennzeichnet**, daß eine Nachbehandlung der Gase in einem sauren und/oder alkalischen Behälter (3, 4) erfolgt.

5. Vorrichtung zur Herstellung homogener und biogener Stoffgemische aus Reststoffen mit einer im wesentlichen gegenüber der Umgebung abgeschlossenen Anlage, **dadurch gekennzeichnet**, daß ein Mischreaktor (1) mit einem Sekundärkreislauf der Gasphase aus Ventilator (2.3) und Kondensator (2) zur Regelung von Temperatur und Feuchtigkeit versehen ist, und daß eine hydrostatische Schleuse (5) angeordnet ist, die nur im Falle eines entsprechenden Überdruckes Gas über einen Biofilter (6) in die Umgebung entläßt, und ansonsten die Anlage ein geschlossenes System ist.

6. Vorrichtung nach Anspruch 5, **dadurch gekennzeichnet**, daß der Mischreaktor (1) mit mindestens einer, bevorzugt aber mit mindestens zwei gegenläufigen Fördereinrichtungen zur Homogenisierung des Materials versehen ist.

7. Vorrichtung nach Anspruch 5 oder 6, **dadurch gekennzeichnet**, daß ein saurer Gaswaschbehälter (3) für eine Nachbehandlung der sich bei der aeroben Behandlung bildenden Gase vorhanden ist.

8. Vorrichtung nach einem der Ansprüche 5 - 7, **dadurch gekennzeichnet**, daß ein alkalischer Gaswaschbehälter (4) für eine Nachbehandlung der sich bei der aeroben Behandlung bildenden Gase vorhanden ist.

9. Vorrichtung nach einem der Ansprüche 5 - 8, **dadurch gekennzeichnet**, daß zur Endreinigung der Gase ein Biofilter (6) vorhanden ist.

10. Vorrichtung nach einem der Ansprüche 5 - 9, **dadurch gekennzeichnet**, daß eines oder mehrere Vorlagegefäße (1.3, 1.4, 1.5) vorhanden sind, die über eine Leitung (16) mit dem Mischreaktor (1) verbunden ist.

11. Vorrichtung nach einem der Ansprüche 5 - 10, **dadurch gekennzeichnet**, daß der Mischreaktor (1) sowie der zugehörige Gaskreislauf mit einer hydrostatischen Schleuse (5) gegenüber der Umgebung abgeschlossen sind.

## Claims

1. Process for the production of humigenic and biogenic substance mixtures from recycled substances in a treatment plant which is substantially isolated from the environment, characterized in that the process is carried out in the wet state and the moisture content and temperature are regulated by a secondary circulation of the gas phase, in that the material contained in a mixing reactor (1) of the plant is homogenized, in that condensate formed in the gas phase is fed back into the mixing reactor (1), uncondensed exhaust vapour from the gas phase is fed back into the mixing reactor (1) and the products formed in the gas washer vessels are also fed back into the mixing reactor (1), and in that a hydrostatic lock (5), which releases gas into the environment via a biofilter (6) only in the event of an excessive rise in pressure, is provided, so that the plant is otherwise a closed system.

2. Process according to Claim 1, characterized in that oxygen, enzymes and/or micro-organisms are added.

3. Process according to Claim 1 or 2, characterized in that the pH value in the mixing reactor (1) is regulated.

4. Process according to any one of Claims 1 - 3, characterized in that a posttreatment of the gases in an acid and/or alkaline vessel (3, 4) is performed.

5. Apparatus for the production of homogeneous and biogenic substance mixtures from recycled substances with a treatment plant which is substantially isolated from the environment, characterized in that a mixing reactor (1) is provided with a secondary circulation of the gas phase comprising blower (2.3) and condenser (2) for regulating temperature and moisture, and in that a hydrostatic lock (5), which releases gas into the environment via a biofilter (6) only in the event of an excessive rise in pressure, is provided, so that the plant is otherwise a closed system.

6. Apparatus according to Claim 5, characterized in that the mixing reactor (1) is provided with at least one, but preferably with at least two, contrarotating conveyors to homogenize the material.

7. Apparatus according to Claim 5 or 6, characterized in that an acid gas washer vessel (3) is present for the posttreatment of the gases formed in the aerobic treatment.

8. Apparatus according to any one of Claims 5 - 7, characterized in that an alkaline gas washer vessel (4) is present for the posttreatment of the gases formed in the aerobic treatment.

9. Apparatus according to any one of Claims 5 - 8, characterized in that a biofilter (6) is present for final purification of the gases.

10. Apparatus according to any one of Claims 5 - 9, characterized in that one or more feed vessels (1.3, 1.4, 1.5) are present, connected by a line (16) to the mixing reactor (1).

11. Apparatus according to any one of Claims 5 - 10, characterized in that the mixing reactor (1) and the associated gas circuit are isolated from the environment by a hydrostatic lock (5).

## Revendications

1. Procédé pour fabriquer des compositions génératrices d'humus et biogènes à partir de résidus dans une installation pratiquement fermée par rapport à l'environnement, **caractérisé** en ce que le processus se déroule à l'état humide et le degré d'humidité et la température sont réglés par l'intermédiaire d'un circuit secondaire de la phase gazeuse, en ce que la matière contenue dans un réacteur de mélange (1) de l'installation est homogénéisée, en ce que le condensat qui se forme dans la phase gazeuse est recyclé dans le réacteur de mélange (1), en ce que la vapeur non condensée provenant de la phase gazeuse est recyclée dans le réacteur de mélange (1), en ce que les produits qui se forment dans les récipients de lavage des gaz (3, 4) sont également recyclés dans le réacteur de mélange (1), et en ce qu'il est prévu un sas hydrostatique (5) qui ne libère du gaz dans l'environnement, par l'intermédiaire d'un filtre biologique (6), que dans le cas d'une surpression correspondante, sans quoi l'installation forme un système fermé.

2. Procédé selon la revendication 1, **caractérisé** en ce qu'on ajoute de l'oxygène, des enzymes et/ou des microorganismes.

3. Procédé selon la revendication 1 ou 2, **caractérisé** en ce que le pH est réglé dans le réacteur de mélange (1).

4. Procédé selon l'une des revendications 1 à 3, **caractérisé** en ce qu'un retraitement des gaz a lieu dans un récipient acide et/ou alcalin (3, 4).

5. Dispositif pour fabriquer des compositions génératrices d'humus et biogènes à partir de résidus, à l'aide d'une installation pratiquement isolée par rapport à l'environnement, **caractérisé** en ce qu'un réacteur de mélange (1) est pourvu d'un circuit secondaire de la phase gazeuse, formé d'un ventilateur (2.3) et d'un condensateur (2) pour le réglage de la température et de l'humidité, et en ce qu'il est prévu un sas hydrostatique (5) qui ne libère du gaz dans l'environnement, par l'intermédiaire d'un filtre biologique (6), que dans le cas d'une surpression correspondante, sans quoi l'installation forme un système fermé.

6. Dispositif selon la revendication 5, **caractérisé** en ce que le réacteur de mélange (1) est pourvu d'au moins un, mais de préférence d'au moins deux dispositifs transporteurs à mouvement contraire pour l'homogénéisation de la matière.

7. Dispositif selon la revendication 5 ou 6, **caractérisé** en ce qu'il est prévu un récipient acide de lavage des gaz (3) pour un retraitement des gaz qui se forment lors du traitement aérobie.

8. Dispositif selon l'une des revendications 5 à 7, **caractérisé** en ce qu'il est prévu un récipient alcalin de lavage des gaz (4) pour un retraitement des gaz qui se forment lors du traitement aérobie.

9. Dispositif selon l'une des revendications 5 à 8, **caractérisé** en ce qu'il est prévu un filtre biologique (6) pour l'épuration finale des gaz.

10. Dispositif selon l'une des revendications 5 à 9, **caractérisé** en ce qu'il est prévu un ou plusieurs récipients collecteurs (1.3, 1.4, 1.5) qui sont reliés par une conduite (16) au réacteur de mélange (1).

11. Dispositif selon l'une des revendications 5 à 10, **caractérisé** en ce que le réacteur de mélange (1) et le circuit de gaz correspondant sont isolés de l'environnement grâce à un sas hydrostatique (5).
